# EUROPEAN PATENT APPLICATION

(11) **EP 1 612 795 A1**
(43) Date of publication of application: **04.01.2006**
(21) Application number: 04724767.1
(22) Date of filing: 31.03.2004
(51) Int. Cl.: G11B 27/034, H04N 5/91

(54) **EDITION DEVICE**

(30) Priority: 04.04.2003 JP 2003102168
(71) Applicant: SONY CORPORATION, Tokyo 141-0001 (JP)
(72) Inventor: NISHIDA, Ryusuke, Shinagawa-ku, Tokyo 141-0001 (JP); TSUCHIYA, Kazuhisa, Shinagawa-ku, Tokyo 141-0001 (JP)
(74) Representative: Tyson, Robin Edward
(86) International application number: PCT/JP2004/004683
(87) International publication number: WO 2004/090901

(57) **Abstract**

This invention realizes a more advanced editing process in all editing apparatuses, regardless of the type of editing apparatus. According to this invention, sequence data NSD10 for nonlinear editing is created based on an SMIL file SF10 in which edit contents to create sequence data SD10 by editing video data VD10 to VD12 and audio data AD10 and AD11 are described in the SMIL, an editing process is performed on the sequence data NSD10 for nonlinear editing, and an SMIL file SF10N is created based on the editing process, so as to execute a more advanced editing process, regardless of the type of editing apparatus.

## Description

### Technical Field

This invention relates to an editing apparatus and, more particularly, is suitably applied to a nonlinear editing apparatus capable of creating an edit list based on an editing process when executing the editing process.

### Background Art

There are editing apparatuses (hereinafter, referred to as nonlinear editing apparatus) which are designed to read material data such as video data and audio data from randomly-accessible recording media such as hard disks and create a series of audiovisual data (hereinafter, referred to as sequence data) by editing the material data such as connecting desired parts of the data.

Such a nonlinear editing apparatus is designed to create sequence data by performing an editing process and also create an edit list by using editing process information indicating the contents of the editing process. (for example, refer to patent reference 1)

Such edit list is a text file describing editing process information in an EDL (Edit Decision List) format and is referred to as an EDL file.

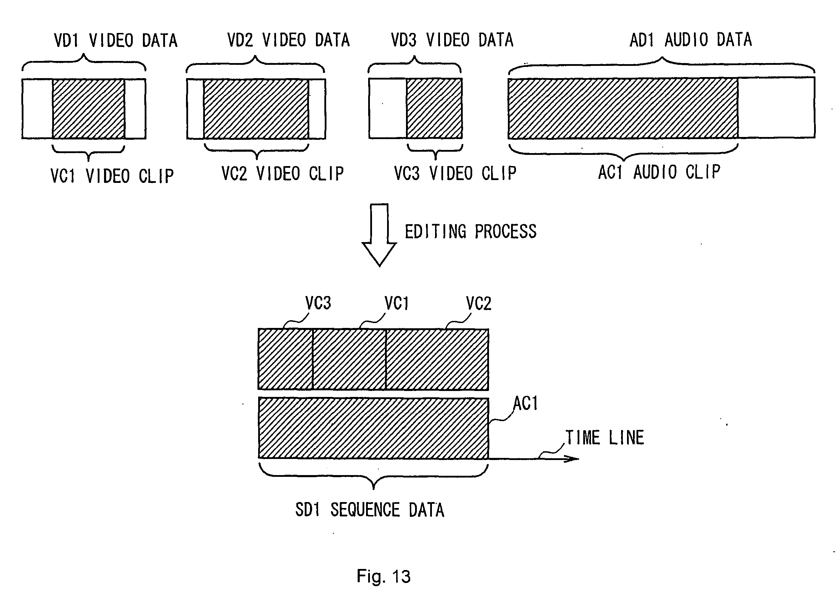

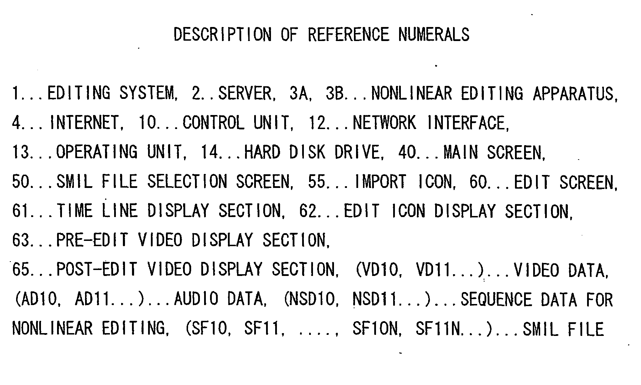

As shown in Fig. 13, a nonlinear editing apparatus creates such sequence data SD1 as to display historical structures with classic music, by connecting desired video parts VC1, VC2 and VC3 (hereinafter, referred to as video clips VC1, VC2, and VC3) of video data recording the video of the historical structures and a desired audio part AC1 (hereinafter, referred to as audio clip AC1) of audio data AD1 recording the classic music on a time line.

At this time, based on the contents of the editing process executed to create the sequence data SD1, the nonlinear editing apparatus creates an EDL file by using, as editing process information, the names of material data of the video data VD1 to VD3 and the audio data AD1, edit point information indicating the IN-points and OUT-points specifying the video clips VC1 to VC3 and the audio clip AC1, and playback speed information.

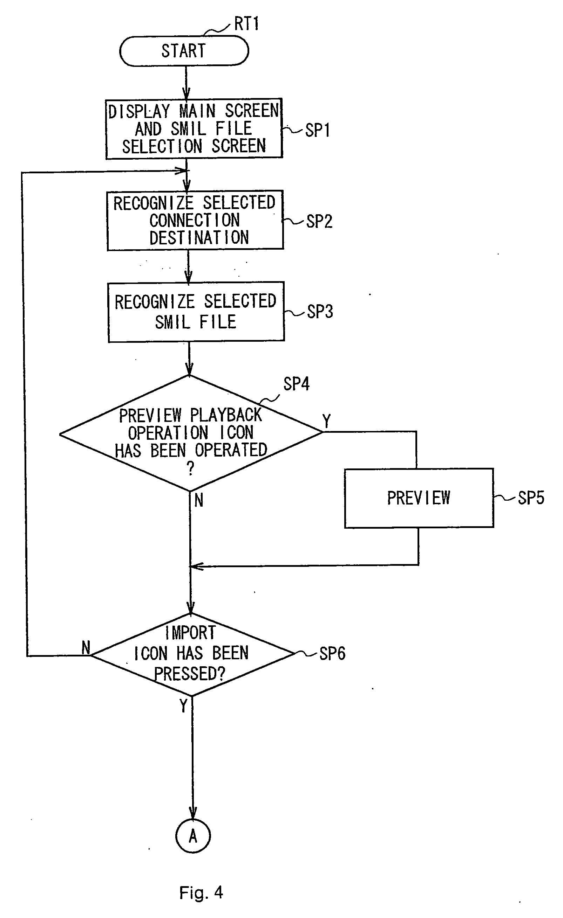

### Patent Reference 1 Japanese Patent Laid-Open No. 2002-24750 (Fourth Section, Fig. 4)

By the way, nonlinear editing apparatuses having the above configuration employ a different format for EDL files from different types of nonlinear editing apparatus. For example, an EDL file created by a nonlinear editing apparatus cannot be read by different types of nonlinear editing apparatus, so that the different types of nonlinear editing apparatus cannot be used to execute an editing process based on the EDL file.

In addition, editing process information described in an EDL file are limited to the name of material data, edit point information indicating IN-points and OUT-points, and playback speed information. In other words, detailed editing process information cannot be written in the EDL file, such as effect information including zoom-in and zoom-out processes, wiping process, and fade-in and fade-out processes, and meta data information.

As a result, nonlinear editing apparatuses cannot execute an advanced editing process covering all effect information on the basis of an EDL file.

### Disclosure of the Invention

This invention has been made in view of foregoing, and proposes an editing apparatus capable of executing a more advanced editing process which can be performed by all editing apparatuses, regardless of the types of editing apparatuses.

To solve the above problem, this invention provides: an edit list recognition unit for recognizing an edit list in which edit contents are described in a general-purpose data description language, the edit contents used for creating a series of video content by editing a plurality of edit material; a video content creation unit for creating the video content by editing the plurality of edit material based on the edit contents of the edit list; an editing processor for performing an editing process on the video content created by the video content creation unit; and an edit list creation unit for creating a new edit list in the general-purpose data description language based on the editing process executed by the editing processor.

As a result, the editing process can be performed based on the edit list described in the general-purpose data description language and the new edit list can be created according to the editing process, which can allows all types of editing apparatus to execute the editing process.

In addition, according to this invention, the edit list recognition unit recognizes the edit list describing effect information and meta data information as the contents of the editing process.

As a result, the edit list based on various editing processes can be recognized, thus making it possible to execute a more advanced editing process based on the edit list.

### Brief Description of the Drawings

Fig. 1 is a schematic diagram showing an entire construction of an editing system to which this invention is applied.
Fig. 2 is a schematic diagram showing a structure of sequence data.
Fig. 3 is a schematic diagram showing a structure of a nonlinear editing apparatus.
Fig. 4 is a flowchart showing an editing procedure.
Fig. 5 is a flowchart following the editing procedure of Fig. 4.
Fig. 6 is a flowchart showing the editing procedure on an edit screen.
Fig. 7 is a schematic diagram showing a main screen (before import).
Fig. 8 is a schematic diagram showing an SMIL file selection screen.
Fig. 9 is a schematic diagram showing a structure of sequence data for nonlinear editing.
Fig. 10 is a schematic diagram showing the main screen (after import).
Fig. 11 is a schematic diagram showing an edit screen (before editing).
Fig. 12 is a schematic diagram showing the edit screen (after editing).
Fig. 13 is a schematic diagram showing a structure of conventional sequence data.

### Best Mode for Carrying Out the Invention

Hereinafter, one embodiment of this invention will be described with reference to the accompanying drawings.

### (1) Entire construction of editing system according to this invention

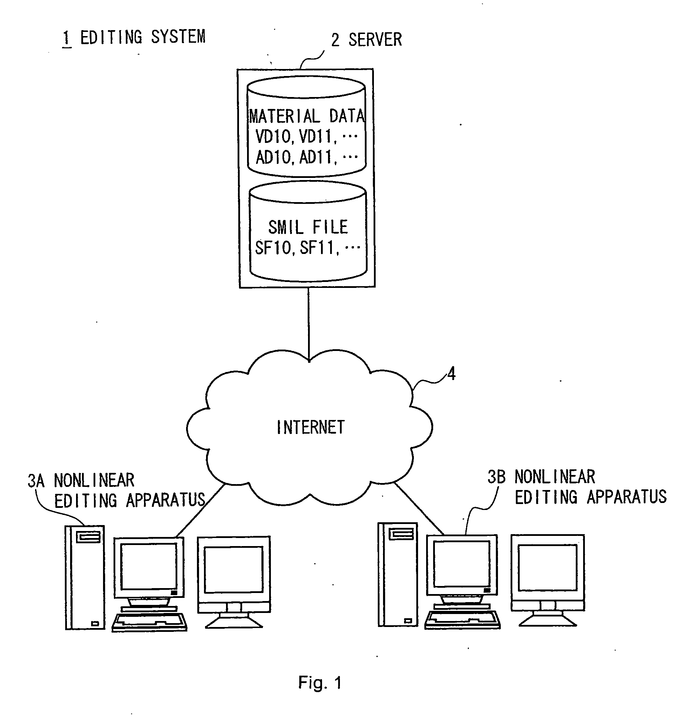

Referring to Fig. 1, reference numeral 1 shows an editing system to which this invention is applied, in which a server 2 and nonlinear editing apparatuses 3A and 3B are connected to each other via the Internet 4.

The server 2 stores material data such as video data VD10, VD11, ..., and audio data AD10, AD11, ..., and SMIL (Synchronized Multimedia Integration Language) files SF10, SF11, ..., which are described later.

An SMIL file is a file in an SMIL format created by converting an XML (extensible Markup Language), the XML being a general-purpose data description language which does not require a fixed description format and in which various data can be communicated between platforms on the Internet 4, the SMIL being a multimedia data description language which is specialized for only communication of multimedia data such as video data and audio data.

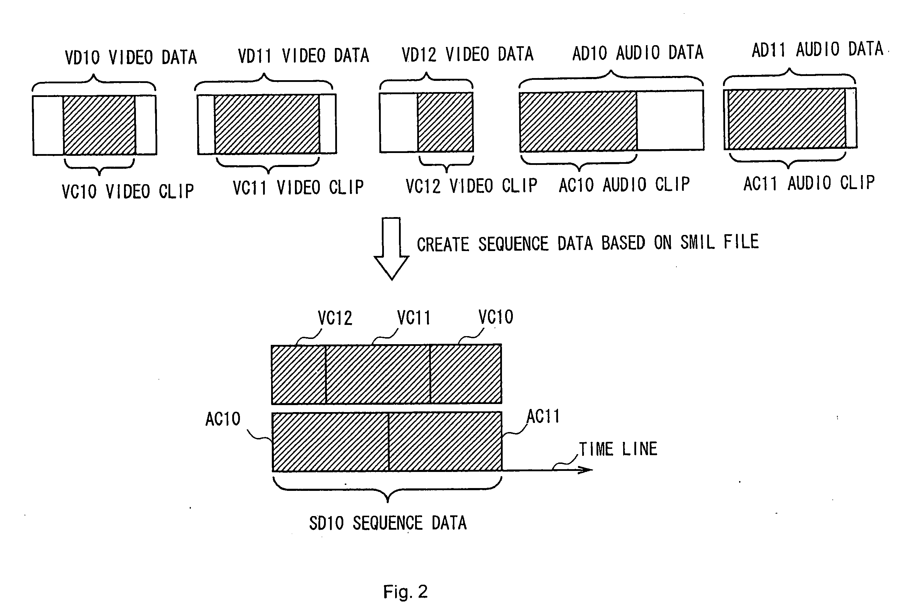

In actual, the SMIL file SF10 describes editing process information which is used for creating sequence data SD10 by connecting video clips VC10, VC11, and VC12 of the video data VD10, VD11, and VD12 and audio clips AC10 and AC11 of the audio data AD10 and AD11 on a time line, as shown in Fig. 2, for example.

The editing process information described in the SMIL file SF10 includes the material data names of the video data VD10 to VD12 and the audio data AD10 and AD11, edit point information indicating the IN-points and OUT-points specifying the video clips VC10 to VC12 and the audio clips AC10 and AC11, and playback speed information, and in addition, includes effect information and meta data information indicating the attribute of the sequence data SD10, the effect information indicating wiping process, fade-in and fade-out processes, cross-fade process, zoom-in and zoom-out processes, and PinP (Picture in Picture) process to be applied to the sequence data SD10.

Since the SMIL file SF10 is in the SMIL format, it can include editing process information indicating various processes such as the effect information and meta data information, in addition to editing process information such as the material data names, IN-point and OUT-point information, and playback speed information which can be described in the EDL format.

On the other hand, the nonlinear editing apparatuses 3A and 3B download material data being stored in the server 2, such as the SMIL files SF10, SF11, ..., the video data VD10, VD11, ..., and the audio data AD10, AD11, via the Internet 4 so as to execute an editing process based on the data.

### (2) Structure of nonlinear editing apparatus

The structure of the nonlinear editing apparatuses 3A and 3B will be now described. Since the nonlinear editing apparatuses 3A and 3B have the same structure, only the structure of the nonlinear editing apparatus 3A will be described here and that of the nonlinear editing apparatus 3B will be omitted.

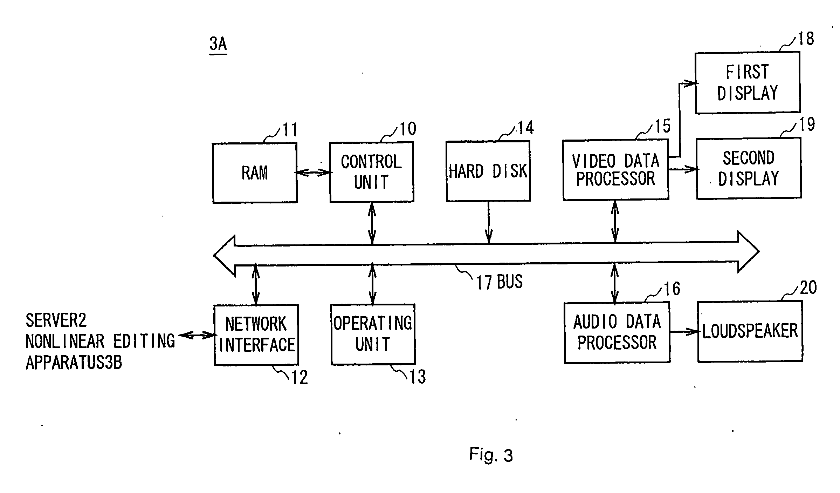

As shown in Fig. 3, in the nonlinear editing apparatus 3A, a RAM (Random Access Memory) 11 used as a work area is connected to a control unit 10 comprising a CPU (Central Processing Unit).

In addition, in the nonlinear editing apparatus 3A, a network interface 12, an operating unit 13, a hard disk drive 14, a video data processor 15, and an audio data processor 16 are connected to the control unit 10 via a bus 17, the network interface 12 communicating material data with the server 2 and the nonlinear editing apparatus 3B via the Internet 4, the material data including the SMIL files SF10, SF11, ..., video data VD10, VD11, ..., and audio data AD10, AD11, ..., the operating unit 13 transferring various commands from an operator to the control unit 10.

In addition, in the nonlinear editing apparatus 3A, a first display 18 and a second display 19 are connected to the video data processor 15, and a loudspeaker 20 is connected to the audio data processor 16.

In actual, the nonlinear editing apparatus 3A downloads, for example, the SMIL file SF10 and the video data VD10, VD11, VD12 and the audio data AD10 and AD11 corresponding to the material data names described in the SMIL file SF10, from the server 2 via the network interface 12, creates sequence data NSD10 for nonlinear editing (described later) in a prescribed edit format suitable for the editing process of the nonlinear editing apparatus 3A, using the SMIL file SF10 as an edit list, and stores the sequence data NSD10 for nonlinear editing in the hard disk drive 14.

The nonlinear editing apparatus 3A reads the sequence data NSD10 for nonlinear editing from the hard disk drive 14, obtains a video signal by demodulating the video data parts of the sequence data NSD10 for nonlinear editing with the video data processor 15, and outputs the video signal from the first display 18 and the second display 19. At this time, the nonlinear editing apparatus 3A also obtains an audio signal by demodulating the audio data parts of the sequence data NSD10 for nonlinear editing with the audio data processor 16, and outputs the audio signal from the loudspeaker 20.

As described above, the nonlinear editing apparatus 3A lets an operator confirm the video and sound of the sequence data NSD10 for nonlinear editing by outputting the sequence data NSD10 for nonlinear editing from the first display 18, the second display 19, and the loudspeaker 20. As a result, the operator can execute an editing process while actually confirming the contents of the sequence data NSD10 for nonlinear editing.

### (3) Editing procedure

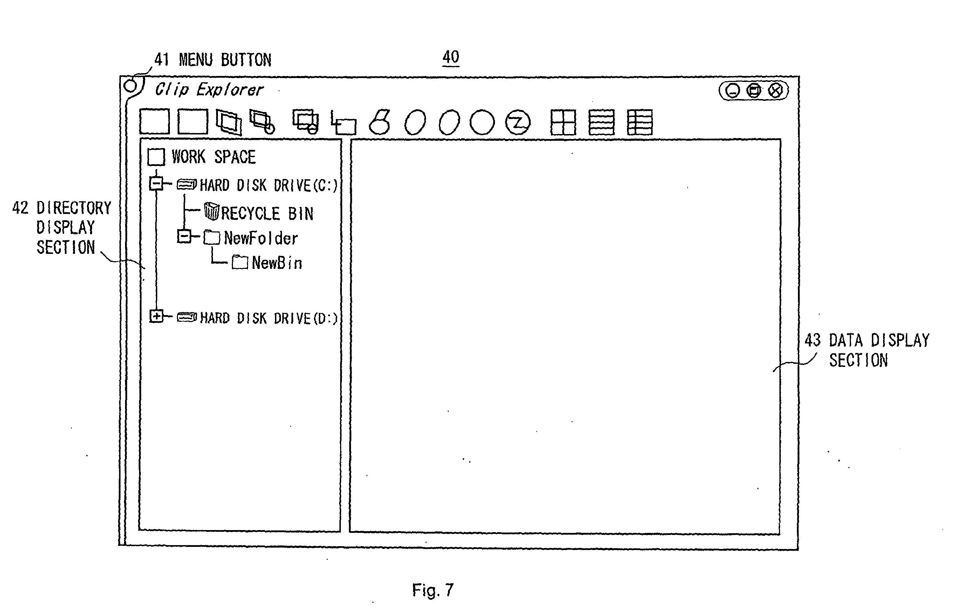

The editing procedure of the nonlinear editing apparatus 3A will be now described with reference to the flowcharts of Fig. 4, Fig. 5 and Fig. 6 and the screens of Fig. 7, Fig. 8, Fig. 10, Fig. 11, and Fig. 12.

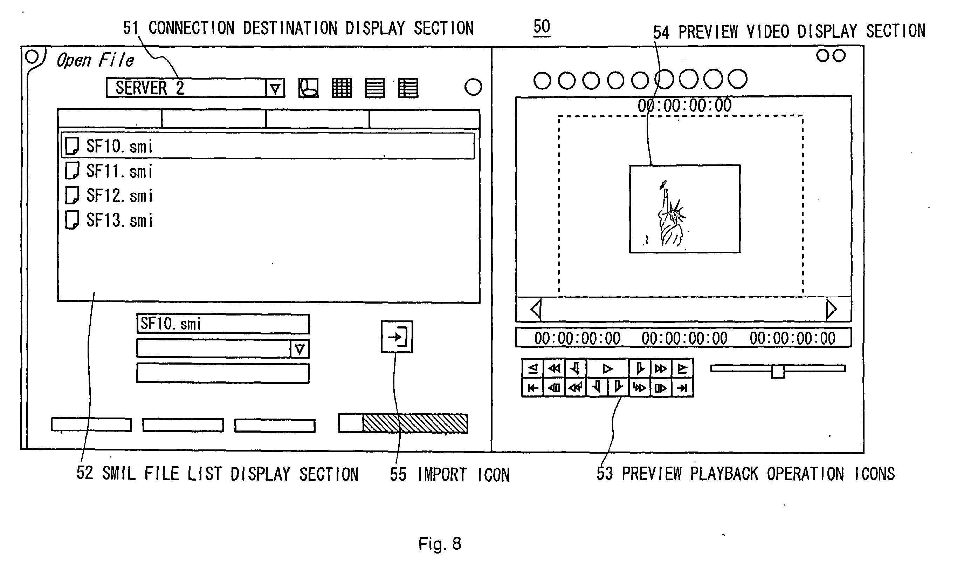

As shown in Fig. 4, the control unit 10 of the nonlinear editing apparatus 3A enters a start step of the routine RT1 and goes on to step SP1. At step SP1, the control unit 10 displays a main screen 40 on the first display 18 as shown in Fig. 7 and displays an SMIL file selection screen 50 on the second display 19 as shown in Fig. 8, and then moves to next step SP2.

The main screen 40 (Fig. 7) has a menu button 41 for displaying a menu (not shown) for finishing, etc., an editing process, a directory display section 42 for displaying a tree of directories of the hard disk drive 14 contained in the nonlinear editing apparatus 3A, and a data display section 43 for displaying the sequence data NSD10 for nonlinear editing, and video clips for nonlinear editing and audio clips for nonlinear editing, described later, composing the sequence data NSD10 for nonlinear editing, which are stored in the hard disk drive 14. In Fig. 7, the data display section 43 has no data because the sequence data NSD10 for nonlinear editing, the video clips for nonlinear editing and the audio clips for nonlinear editing have not been stored in the hard disk drive 14.

The SMIL file selection screen 50 (Fig. 8), on the other hand, has a connection destination display section 51 for displaying the server 2 or the nonlinear editing apparatus 3B as a connection destination being connected to the nonlinear editing apparatus 3A via the Internet 4, an SMIL file list display section 52 for displaying a list of SMIL files SF10 ([SF10.smi]), SF11 ([SF11.smi]), ... being stored in, for example, the server 2 which is a connection destination, preview playback operation icons 53 for manipulating the preview of, for example, the video of the sequence data SD10 based on a desired SMIL file SF10 ([SF10.smi]) out of the SMIL files SF10 ([SF10.smi]), SF11 (SF11.smi)), ... being displayed in the SMIL file list display section 52, a preview video display section 54 for displaying the video of the sequence data SD10 according to operation of the preview playback operation icons 53, and an import icon 55 for creating sequence data NSD10 (described later) for nonlinear editing in a prescribed edit format suitable for editing processes of the nonlinear editing apparatus 3A, based on the description of the SMIL file SF10 being stored in the server 2, and storing the data NSD10 in the hard disk drive 14 (hereinafter, referred to as an import process).

At step SP2 (Fig. 4), when the operator selects, for example, the server 2 out of the connection destinations displayed in the connection destination display section 51 of the SMIL file selection screen 50 (Fig. 8) with the operating unit 13, the control unit 10 recognizes that the sever 2 has been selected as a connection destination and displays a list of the SMIL files SF10 ([SF10.smi]), SF11 ([SF11.smi]), ..., being stored in the server 2 in the SMIL file list display section 52, and the moves on to next step SP3.

At step SP3, when the operator selects, for example, an SMIL file SF10 ([SF10.smi]) out of the SMIL files SF10 ([SF10.smi]), SF11 ([SF11.smi]), ... being displayed in the SMIL file list display section 52, with the operating unit 13, the control unit 10 recognizes this matter and then moves on to step SP4.

At step SP4, the control unit 10 determines whether the operator has operated the preview playback operation icons 53 for the SMIL file SF10 ([SF10.smi]) with the operating unit 13.

When an affirmative result is obtained here, the control unit 10 moves on to step SP5 to download this SMIL file SF10 ([SF10.smi]) and also download the video data VD10 to VD12 and the audio data AD10 and AD11 corresponding to the material data names described in the SMIL file SF10 ([SF10.smi]), and creates the sequence data SD10 based on the description of the SMIL file SF10 ([SF10.smi]) by using the SMIL file SF10 ([SF10.smi]) as an edit list. Note that the sequence data SD10 is not converted into a prescribed edit format because the sequence data SD10 is previewed only and is not edited now.

Then the control unit 10 playbacks the video of the sequence data SD10 in the preview video display section 54 and outputs the sound of the sequence data SD10 from the loudspeaker 20. In addition, the control unit 10 performs a playback process such as fast playback or rewind playback on the sequence data SD10 according to the operator's operation of the preview playback operation icons 53, and then moves on to next step SP6.

When a negative result is obtained at step SP4, this means that the operator has not operated the preview playback operation icons 53. In this case the control unit 10 moves on to step SP6.

At step SP6, the control unit 10 determines whether the operator has pressed the import icon 55 with the operating unit 13.

When an affirmative result is obtained here, the control unit 10 recognizes that the import icon 55 has been pressed and starts to import the SMIL file SF10 and then moves on to next step SP7.

When a negative result is obtained at step SP6, the control unit 10 returns back to step SP2, and repeats the processes from step SP2 to step SP6 until the import icon 55 is pressed.

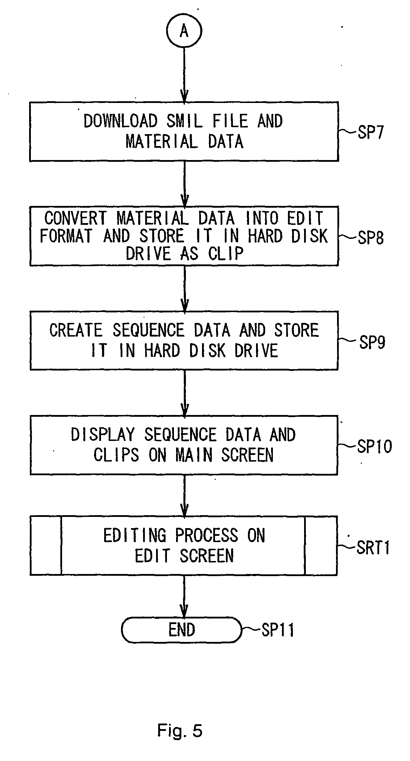

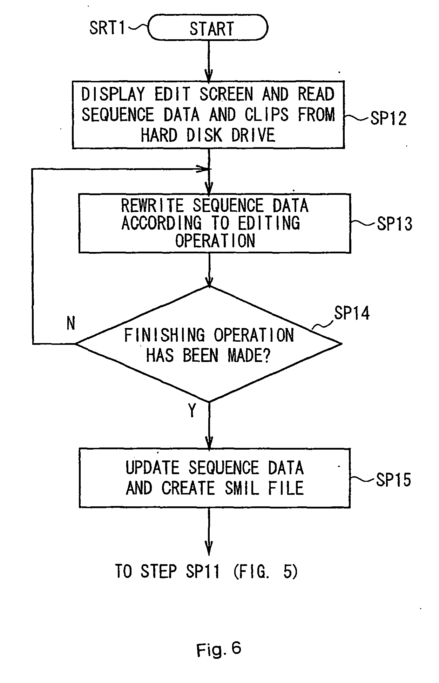

At step SP7 (Fig. 5), the control unit 10 downloads the SMIL file SF10 from the server 2 and also downloads the video data VD10 to VD12 and the audio data AD10 and AD11 corresponding to the material data names described in the SMIL file SF10 from the server 2 by using the SMIL file SF10 as an edit list, and then moves on to step SP8.

For example, the video data VD10 to VD12 are video data in various kinds of video formats such as AVI (Audio Video Interleave) format, MPEG (Moving Picture Expert Group) format, rm (Real Media) format, qt (Quick Time) format, and the audio data AD10 and AD11 are audio data in various kinds of audio formats such as wav (Wave) format, mp3 (MPEG Audio Layer3) format, ra (Real Audio) format.

In a case where the video data VD10 to VD12 and the audio data AD10 and AD11 are created in different video formats and audio formats, the control unit 10 cannot perform an editing process in real time because of very heavy processing loads if it decodes data in the different formats and executes the editing process.

Therefore, the control unit 10 converts all the video data VD10 to VD12 and the audio data AD10 and AD11 into a prescribed edit format suitable for execution of the editing process and then execute the editing process, resulting in performing the editing process in real time.

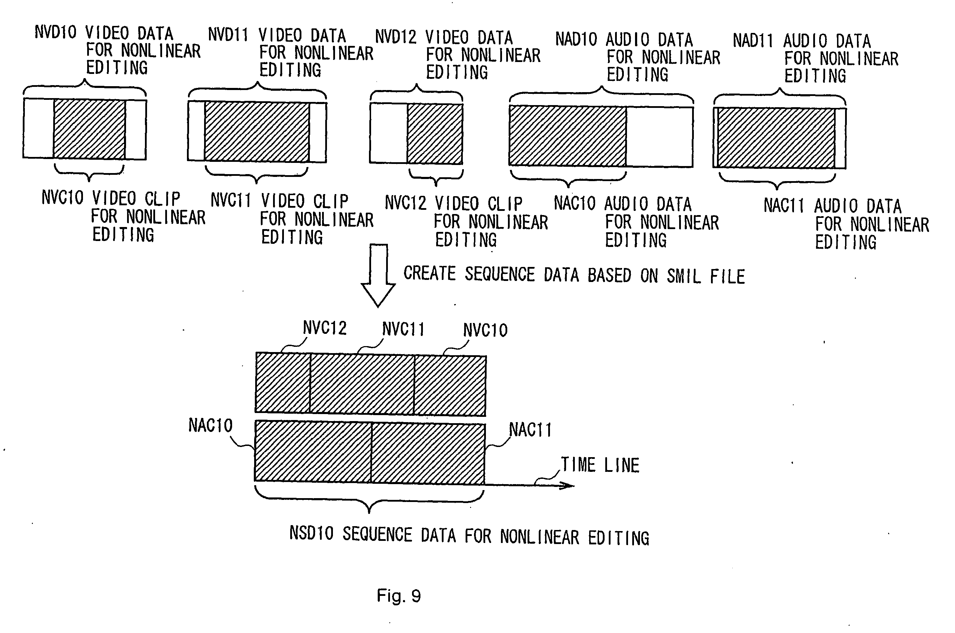

Specifically, at step SP8, the control unit 10 converts the video data VD10, VD11 and VD12 into the edit format suitable for editing processes of the nonlinear editing apparatus 3A to create video data NVD10, NVD11 and NVD12 for nonlinear editing (Fig. 9), and extracts desired video parts of the video data NVD10, NVD11 and NVD12 for nonlinear editing based on the edit point information of the SMIL file SF10 and stores them in the hard disk drive 14 as video clips NVC10, NVC11, and NVC12 for nonlinear editing.

In addition, the control unit 10 converts the audio data AD10 and AD11 into the edit format suitable for editing processes of the nonlinear editing apparatus 3A to create audio data NAD10 and NAD11 for nonlinear editing, and extracts desired audio parts of the audio data NAD10 and NAD11 for nonlinear editing based on the edit point information of the SMIL file SF10 and stores them in the hard disk drive 14 as audio clips NAC10 and NAC11 for nonlinear editing, and then moves on to step SP9.

At step SP9, the control unit 10 connects the video clips NVC10 to NVC12 for nonlinear editing and the audio clips NAC10 and NAC11 for nonlinear editing based on the editing process information described in the SMIL file SF10 as shown in Fig. 9, to create sequence data NSD10 for nonlinear editing in the prescribed edit format suitable for editing processes of the nonlinear editing apparatus 3A.

Then when the control unit 10 finishes the storage of the sequence data NSD10 for nonlinear editing in the hard disk drive 14, it ends the import process of the SMIL file SF10 and then moves on to next step SP10.

As described above, the control unit 10 creates the sequence data NSD10 for nonlinear editing based on the video clips NVC10, NVC11 and NVC12 for nonlinear editing and the audio clips NAC10 and NAC11 in the prescribed edit format suitable for editing processes, so as to perform an editing process on the sequence data NSD10 for nonlinear editing with small processing loads, thus making it possible to execute the editing process in real time.

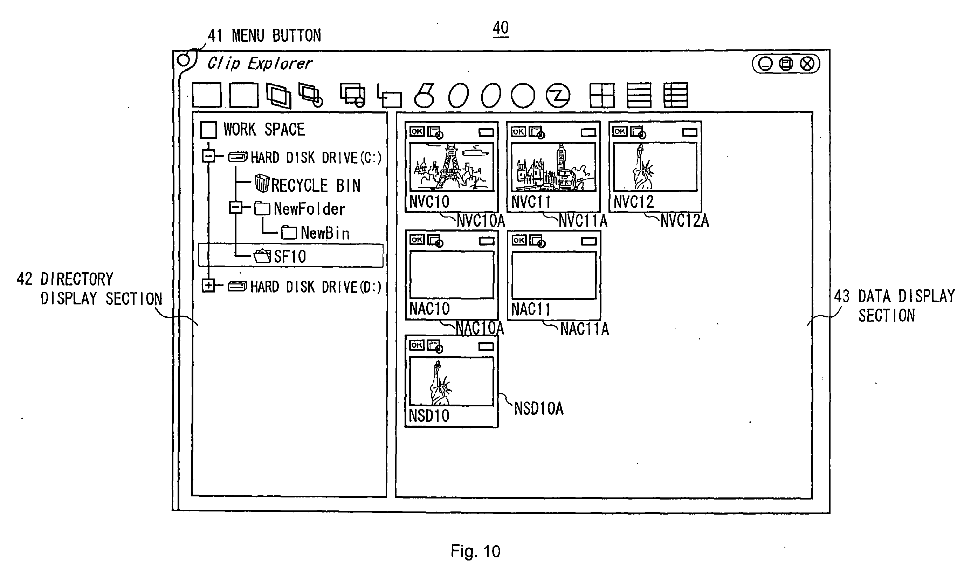

At step SP10, as shown in Fig. 10, the control unit 10 displays, in the data display section 43 of the main screen 40, video clip storage icons NVC10A to NVC12A representing that the video clips NVC10 to NVC12 for nonlinear editing has been stored in the hard disk drive 14, audio clip storage icons NAC10A and NAC11A representing that the audio clips NAC10 and NAC11 for nonlinear editing have been stored in the hard disk drive 14, and a sequence data storage icon NSD10A representing that the sequence data NSD10 for nonlinear editing has been stored in the hard disk drive 14.

Therefore, the control unit 10 lets the operator immediately confirm that the video clips NVC10 to NVC12 for nonlinear editing, the audio clips NAC10 and NAC11 for nonlinear editing, and the sequence data NSD10 for nonlinear editing have been stored in the hard disk drive 14, with the video clip storage icons HVC10A to NVC12A, the audio clip storage icons NAC10A and NAC11A and the sequence data storage icon NSD10A being displayed in the data display section 43 of the main screen 40.

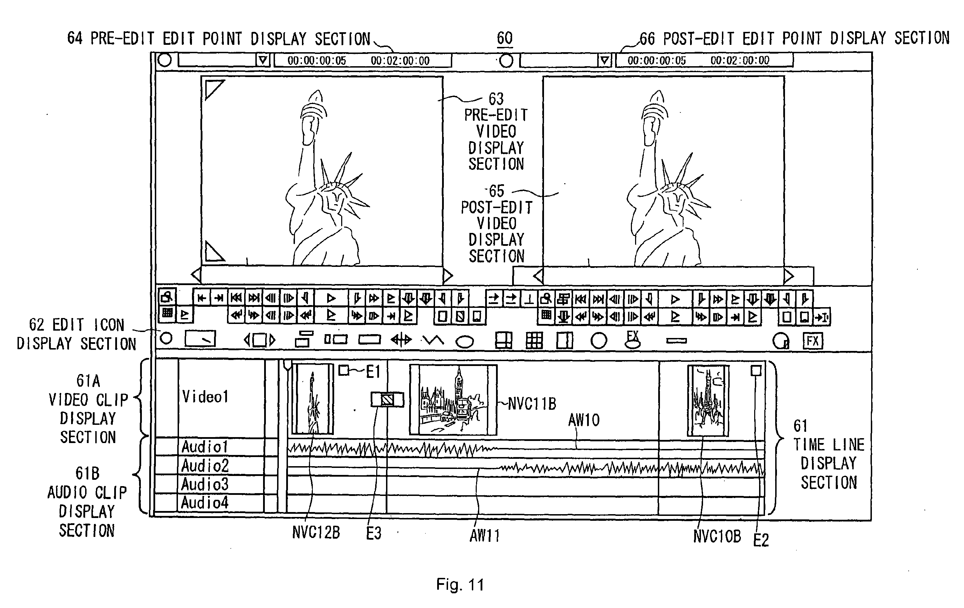

Then the control unit 10 moves on to a subroutine SRT1 (Fig. 6) to start the editing process on the edit screen (Fig. 11).

Specifically, the control unit 10 enters a start step of the subroutine SRT1 shown in Fig. 6 and moves on to step SP12.

At step SP12, the control unit 10 closes the SMIL file selection screen 50 (Fig. 8) being displayed in the second display 19, displays an edit screen 60 as shown in Fig. 11 instead, reads the video clips NVC10 to NVC12 for nonlinear editing, the audio clips NAC10 and NAC11 for nonlinear editing and the sequence data NSD10 for nonlinear editing from the hard disk drive 14, and then moves on to step SP13.

The editing screen 60 has a time line display section 61, an edit icon display section 62, a pre-edit video display section 63, a pre-edit edit point display section 64, a post-edit video display section 65 and a post-edit edit point display section 66.

The time line display section 61 has a video clip display section 61A for displaying the outlines of the video clips NVC10 to NVC12 for nonlinear editing and an audio clip display section 61B for the outlines of the audio clips NAC10 and NAC11 for nonlinear editing, the clips NVC10 to NVC 12 and NAC10 and NAC11 composing the sequence data NSD10 for nonlinear editing clipped on the time line.

The video clip display section 61A displays video clip icons NVC10B, NVC11B and NVC12B indicating the video clips NVC10, NVC11 and NVC12 for nonlinear editing composing the sequence data NSD10 for nonlinear editing, along the time line in an order of reproduction.

In addition, the video clip display section 61A displays icons indicating various kinds of effect information, including effect icons E1 and E2 indicating the zoom-in and zoom-out processes subjected to the video clips NVC10 and NVC12 for nonlinear editing and an effect icon E3 indicating the fade-in and fade-out processes subjected to a place between the video clips NVC12 and NVC11 for nonlinear editing, based on the effect information described in the SMIL file SF10.

The audio clip display section 61B, on the other hand, displays audio waveforms AW10 and AW11 representing audio clips NAC10 and NAC11 for nonlinear editing composing the sequence data NSD10 for nonlinear editing, along the time line.

As described above, with the time line display section 61, the operator can roughly confirm the contents of the sequence data NSD10 for nonlinear editing created based on the editing process information described in the SMIL file SF10 and also confirm the various kinds of editing process information such as the effect information described in the SMIL file SF10, from the effect icons E1, E2 and E3.

The edit icon display section 62 displays various kinds of edit icons allowing the editing process to be performed on the sequence data NSD10 for nonlinear editing easily, such as effect icons for applying various kinds of effect processes including the zoom-in and zoom-out processes and the fade-in and fade-out processes to the sequence data NSD10 for nonlinear editing, and playback operating icons for performing a playback process and a fast-forwarding process on the sequence data NSD10 for nonlinear editing.

The pre-edit video display section 63 displays, for example, the video of the video clip NVC12 for nonlinear editing composing the sequence data NSD10 for nonlinear editing. The pre-edit edit point display section 64 displays edit point information indicating the IN-point (for example, 00:00:00:05) and the OUT-point (for example, 00:02:00:00) of the video clip NVC12 for nonlinear editing being displayed in the pre-edit video display section 63.

The post-edit video display section 65 displays the video created by applying an editing process to the video clip NVC12 for nonlinear editing being displayed in the pre-edit video display section 63 according to the operator's operation of effect icons of the edit icon display section 62. The post-edit edit point display section 66 displays edit point information indicating the IN-point (for example, 00:00:00:05) and the OUT-point (for example, 00:02:00:00) of the video clip NVC12 for nonlinear editing subjected to the editing process being displayed in the post-edit video display section 65.

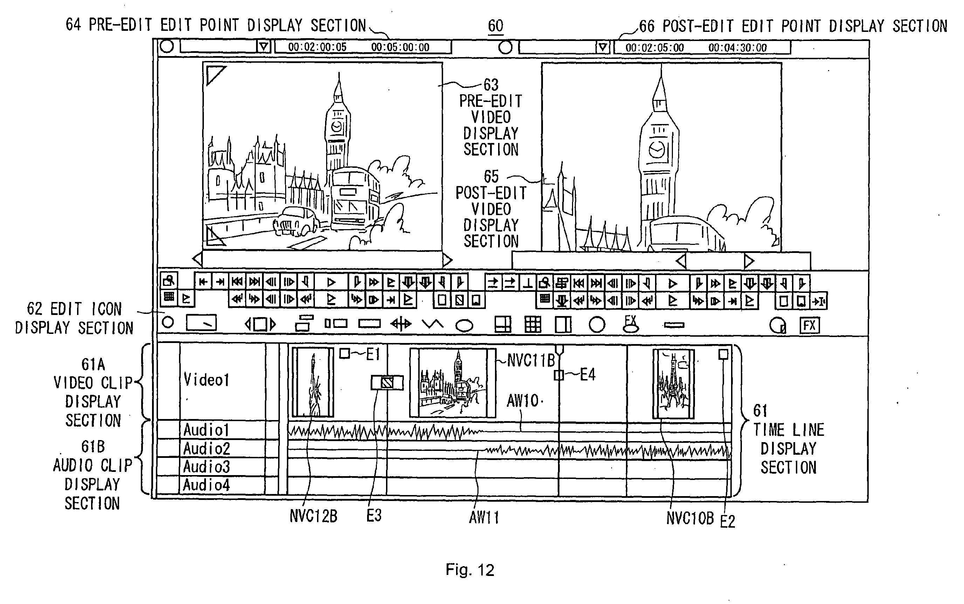

In actual, when the operator newly operates the edit icons of the edit icon display section 62 so as to apply the zoom-in process to the video clip NVC11 for nonlinear editing and change the IN-point (for example, 00:02:00:05) and the OUT-point (for example, 00:05:00:00), the edit screen 60 additionally displays an effect icon E4 representing the zoom-in process in the video clip display section 61A and the video clip NVC11 for nonlinear editing subjected to the zoom-in process in the post-edit video display section 65 in real time, and displays the IN-point (for example, 00:02:05:00) and the OUT-point (for example, 00:04:30:00 after the change in the post-edit edit point display section 66, as shown in Fig. 12.

As described above, the nonlinear editing apparatus 3A can let the operator confirm all the editing process information for the sequence data NSD10 for nonlinear editing based on the description of the SMIL file SF10 and also confirm the editing process performed on the sequence data NSD10 for nonlinear editing according to the operator's operation of the edit icons of the edit icon display section 62 in real time, on the edit screen 60 (Fig. 11 and Fig. 12).

Thus the operator can easily perform an advanced editing process by operating the edit icons of the edit icon display section 62 while confirming the editing process information of the SMIL file SF10, on the edit screen 60.

At step SP13 (Fig. 6), the control unit 10 rewrites the sequence data NSD10 for nonlinear editing according to the operator's editing operation and moves on to next step SP14.

At step SP14, the control unit determines whether the operator has operated the menu button 41 of the main screen 40 (Fig. 10) to finish the editing work.

When a negative result is obtained here, the control unit 10 determines that the operator is doing the editing work on the editing screen 60 (Fig. 11 and Fig. 12) and returns back to step SP12.

When an affirmative result is obtained at step SP14, the control unit 10 recognizes that the operator has finished the editing work and moves on to next step SP15.

At step SP15, the control unit 10 stores the sequence data NSD10 for nonlinear editing which has been subjected to the editing process according to the operator's editing operation, to update the sequence data NSD10 in the hard disk drive 14, creates a new SMIL file SF10N based on the updated sequence data NSD10 for nonlinear editing and stores the SMIL file SF10N in the hard disk drive 14, and moves to next step SP11 to finish the editing procedure. ,

### (4) Operation and Effects

According to the above configuration, the nonlinear editing apparatus 3A downloads the SMIL file SF10 from the server 2, and also downloads the video data VD10 to VD12 and the audio data AD10 and AD11 corresponding to the material data names described in the SMIL file SF10 by using the SMIL file SF10 as an edit list.

Then the nonlinear editing apparatus 3A converts the downloaded video data VD10 to VD12 and audio data AD10 and AD11 into the prescribed edit format suitable for editing processes of the nonlinear editing apparatus 3A to create the video data NVD10 to NVD12 for nonlinear editing and the audio data NAD10 and NAD11 for nonlinear editing.

Then based on the edit point information described in the SMIL file SF10, the nonlinear editing apparatus 3A extracts the video clips NVC10 to NVC12 for nonlinear editing from the video data NVD10 to NVD12 for nonlinear editing and also extracts the audio clips NAC10 and NAC11 for nonlinear editing from the audio data NAD10 and NAD11 for nonlinear editing, and stores the video clips NVC10 to NVC12 for nonlinear editing and the audio clips NAC10 and NAC11 for nonlinear editing in the hard disk drive 14.

Then the nonlinear editing apparatus 3A creates the sequence data NSD10 for nonlinear editing by connecting the video clips NVC10 to NVC12 for nonlinear editing and the audio clips NAC10 and NAC11 for nonlinear editing based on the editing process information described in the SMIL file SF10, and stores the sequence data NSD10 for nonlinear editing in the hard disk drive 14.

As described above, the nonlinear editing apparatus 3 creates the sequence data NSD10 for nonlinear editing based on the video clips NVC10 to NVC12 for nonlinear editing and the audio clips NAC10 and NAC11 for nonlinear editing in the prescribed edit format suitable for editing processes, so as to perform an editing process on the sequence data NSD10 for nonlinear editing with small processing loads, thus making it possible to perform the editing process on the sequence data NSD10 for nonlinear editing in real time.

Then the nonlinear editing apparatus 3A reads the sequence data NSD10 for nonlinear editing from the hard disk drive 14, and displays the video clips NVC10 to NVC12 for nonlinear editing and the audio clips NAC10 and NAC11 for nonlinear editing composing the sequence data NSD10 for nonlinear editing, the audio waveforms AW10 and AW11 representing the audio clips NAC10 and NAC11 for nonlinear editing, and the effect icons E1, E2 and E3 based on the effect information described in the SMIL file SF10, in the time line display section 61 of the edit screen 60.

Then the nonlinear editing apparatus 3A rewrites the sequence data NSD10 for nonlinear editing, additionally displays the effect icon E4 in the time line display section 61, and displays the edited video clip NVC12 for nonlinear editing in the post-edit video display section 65 in real time, according to the operator's operation of the edit icons of the edit icon display section 62.

As a result, the nonlinear editing apparatus 3A can let the operator confirm all the editing process information on the sequence data NSD10 for nonlinear editing based on the description of the SMIL file SF10 on the editing screen 60 and also confirm various kinds of editing processes applied to the sequence data NSD10 for nonlinear editing according to the operator's operation of the edit icons of the edit icon display section 62 in real time, so that the operator can perform an advanced editing process easily and immediately.

Further, when the operator finishes an editing process, the nonlinear editing apparatus 3A stores the edited sequence data NSD10 for nonlinear editing so as to update the sequence data NSD10 for nonlinear editing in the hard disk drive 14, and cerates the new SMIL file SF10N based on the updated sequence data NSD10 for nonlinear editing.

That is, the contents of the editing process performed by the nonlinear editing apparatus 3A are all described in the SMIL file SF10N as editing process information.

Then, for example, the nonlinear editing apparatus 3B performs the import process of the SMIL file SF10N created by the nonlinear editing apparatus 3A, via the Internet 4, so as to create the sequence data NSD10 for nonlinear editing edited by the nonlinear editing apparatus 3A. Further, the nonlinear editing apparatus 3B continues to edit the sequence data NSD10 for nonlinear editing.

Further, since the SMIL file SF10N is in the general-purpose SMIL format, both the nonlinear editing apparatus 3A and the nonlinear editing apparatus 3B import the SMIL file SF10N even if they are different types of apparatus.

According to the above configuration, the nonlinear editing apparatus 3A can create the sequence data NSD10 for nonlinear editing based on various kinds of editing process information described in the SMIL file SF10 by using the SMIL file SF10 in the general-purpose SMIL format as an edit list, and can perform various kinds of editing processes on the sequence data NSD10 for nonlinear editing. In addition, the nonlinear editing apparatus 3A can create the SMIL file SF10N in the SMIL format describing the contents of the editing processes after performing the editing processes.

### (5) Other embodiments

Note that the above-described embodiment has described a case where the nonlinear editing apparatus 3A serving as an editing apparatus is provided with the network interface 12 to be connected to the server 2 and the nonlinear editing apparatus 3B via the network interface 12. This invention, however, is not limited to this and the nonlinear editing apparatus 3A can be provided with a USB (Universal Serial Bus) interface or an IEEE (Institute of Electrical and Electronics Engineers) 1394 interface so as to be connected to an externally attached hard disk drive or optical disc drive storing the SMIL files SF10, SF11, ..., and the video data VD10, VD11, ..., and an audio data AD10, AD11, ... as edit material, via the USB interface or the IEEE1394 interface.

In this case, the nonlinear editing apparatus 3A can create the sequence data NSD10 for nonlinear editing as video content based on, for example, the SMIL file SF10, the video data VD10 to VD12 and the audio data AD10 and AD11 being stored in the externally attached hard disk drive or optical disc drive, and can perform an editing process on the sequence data NSD10 for nonlinear editing.

Further, the above-described embodiment has described a case of using the video data VD10, VD11, ..., and the audio data AD10, AD11, ... as material data. This invention, however, is not limited to this and still picture data and text data can be used as material data.

Furthermore, the above-described embodiment has described a case of using the SMIL as a general-purpose data description language. This invention, however, is not limited to this and other kinds of general-purpose data description languages can be used, provided that editing process information according to various editing processes can be described as compared with the EDL.

Furthermore, the above-described embodiment has described a case where the nonlinear editing apparatus 3A is composed of the control unit 10, the network interface 12, the hard disk drive 14, the video data processor 15, the audio data processor 16, the first display 18, the second display 19 and the loudspeaker 20, the control unit 10 serving as an edit list recognition unit, a video content creation unit, an editing processor, and an edit list creation unit. This invention, however, is not limited to this and the nonlinear editing apparatus 3A can be constructed in another circuit structure.

According to this invention as described above, an editing processes can be executed based on various kinds of editing process information described in a versatile edit list and a new edit list can be created according to the editing process, so that a more advanced editing process can be executed regardless of the type of editing apparatus, thus making it possible to realize an editing apparatus capable of executing a more advanced editing process which can be executed by all editing apparatuses, regardless of the type of editing apparatus.

### Industrial Applicability

This invention can be used in an editing apparatus which creates an edit list based on an editing process.

## Claims

1. An editing apparatus comprising:
an edit list recognition unit for recognizing an edit list describing edit contents in a general-purpose data description language, the edit contents used for creating a series of video content by editing a plurality of edit material;
a video content creation unit for creating the video content by performing an editing process on the plurality of edit material based on the edit contents of the edit list;
an editing processor for performing an editing process on the video content created by the video content creation unit; and
an edit list creation unit for creating a new edit list described in the general-purpose data description language based on the editing process executed by the editing processor.

2. The editing apparatus according to claim 1, wherein
the edit list recognition unit recognizes the edit list describing effect information and meta data information as contents of the editing process.

3. The editing apparatus according to claim 1, wherein
the video content creation unit creates the video content by executing the editing process after converting the plurality of edit material into a prescribed edit format suitable for the editing process.

4. The editing apparatus according to claim 1, wherein
the edit list recognition unit recognizes the edit list described in an XML (extensible Markup Language) as the general-purpose data description language.

5. The editing apparatus according to claim 4, wherein
the edit list recognition unit recognizes the edit list described in an SMIL (Synchronized Multimedia Integration language) in which the XML is specialized for video data and audio data.

6. An editing method comprising:
an edit list recognition step of recognizing an edit list in which edit contents are described in a general-purpose data description language, the edit contents used for creating a series of video content by editing a plurality of edit material;
a video content creation step of creating the video content by performing an editing process on the plurality of edit material based on the edit contents of the edit list;
an editing processing step of performing the editing process on the video content created in the video content creation step; and
an edit list creation step of creating a new edit list described in the general-purpose data description language based on the editing process executed in the editing processing step.
